# EUROPEAN PATENT APPLICATION

(11) **EP 1 915 903 A1**
(43) Date of publication of application: **30.04.2008**
(21) Application number: 07118698.5
(22) Date of filing: 17.10.2007
(51) Int. Cl.: A01K 1/015

(54) **Mattress for animals**

(30) Priority: 25.10.2006 IT BS20060187; 19.02.2007 IT BS20070022
(71) Applicant: Bonsaglia & C. S.r.l., 25020 S. Paolo, (BS) (IT)
(72) Inventor: Bonini, Flaviano, 25020, S.Paolo (BS) (IT)
(74) Representative: Galassi, Alessandro

(57) **Abstract**

A mattress for farm animals, particularly ruminants, comprising at least one elastically deformable element (4) having a lower surface (5) that can be coupled with an area (2) to be covered, and an upper surface (6) for supporting at least one animal; the elastically deformable element (4) is obtained from synthetic rubber by way of a molding process.

## Description

The present invention relates to a mattress for farm animals, particularly ruminants.

Preferably, the present invention finds an advantageous application in stables, and in particular in the transit and rest areas for dairy animals or even in pig boxes.

Stable floors are generally made of concrete or other hard materials, which are therefore little comfortable especially in the areas dedicated to animals' rest. As a matter of fact, such floors exert an abrasive action upon the animals' limbs: to lie down, animals make a swinging movement in lateral and longitudinal direction and thus drag their limbs and bodies on said hard floors.

Moreover, in the passages for animals' transit concrete floors are slippery due to the necessary washing and cleaning operations carried out with manual or mechanical scrapers, which smooth the floor and make it slippery.

In order to overcome such drawback, soft floors made of a sand and/or sawdust and/or straw and/or ground rubber bedstead are used.

However, such flooring, which is particularly comfortable for the animal lying on a soft and yielding surface, requires a lot of maintenance by farmers. As a matter of fact, the material which the bedstead is made of is continually dragged out of the rest area by the shuffling movement of the animals' hooves. As a result, the bedstead surface becomes a rough surface with hollows and depressions and has to be periodically smoothed and leveled by the farmer.

A further drawback consists in that the bedstead tends to absorb water and animals' excrements, thus compromising the physical properties of the soft material. As a consequence, the bedstead must anyhow be replaced periodically, so as to keep the animal clean and prevent the latter from resting in a poorly hygienic place.

The aim of the present invention is to solve the problems of the prior art by proposing a mattress for farm animals, especially ruminants, which constitutes a particularly comfortable and hygienic bedding.

In detail, the aim of the invention is to provide a mattress for farm animals, having a uniform, soft and at the same time dry supporting surface, which does not require continuous maintenance operations.

These and other aims, which shall be apparent from the following description, are basically achieved by a mattress for farm animals, particularly ruminants, comprising the characteristics listed in claim 1.

Further characteristics and advantages shall be more evident from the detailed description of a preferred though not exclusive embodiment of a mattress for farm animals according to the present invention.

Such description is disclosed below making reference to the accompanying figures, provided to a merely indicative and non-limiting purpose, wherein:
- Fig. 1 is a schematic perspective view of an area for animals' rest, equipped with a mattress according to a first embodiment of the present invention;
- Fig. 2 is a perspective view from below of a mattress according to the present invention; and
- Fig. 3 is a schematic perspective view of an area for animals' rest, equipped with a mattress according to a second embodiment;
- Fig. 4 is a perspective view of a third embodiment of a mattress according to the invention;
- Figure 5 is a second perspective view of the embodiment of Figure 4.

With reference to the figures mentioned above, the numeral 1 globally refers to a mattress for farm animals, particularly ruminants.

In detail, the present invention is advantageously used in stables for farm animals, particularly dairy animals such as cows.

The mattress 1 is preferably located in rest areas 2, commonly known as beds, designed to house an animal during rest hours, or in areas for animals' transit.

Such areas 2 have a concrete bottom defining a generally flat resting surface 3, which in rest areas can be inclined so as to favor excrement drainage to a draining channel 3a, or so as to make the bed comfortable.

The mattress 1 comprises at least an elastically deformable element 4 having a basically parallelepiped- like shape. It should be pointed out that the accompanying figures show an element 4 with a rectangular layout, basically flat and with constant section. However, the element 4 can have any shape and size depending on the various application needs.

The element 4 is advantageously obtained from synthetic rubber by molding of such elastic material. Advantageously, synthetic rubber is made of a recycled and permeable rubber, which is suitably molded with variable pressure as a function of the wear resistance and of the elasticity to be obtained.

Advantageously, the thickness of the element 4 is of 5 to 300 mm, depending on the elasticity degree and on the stiffness of the material used.

The elastic element 4 can further be made up of a plurality of overlapping layers glued to one another, each layer having different properties as far as resistance and elastic deformability are concerned.

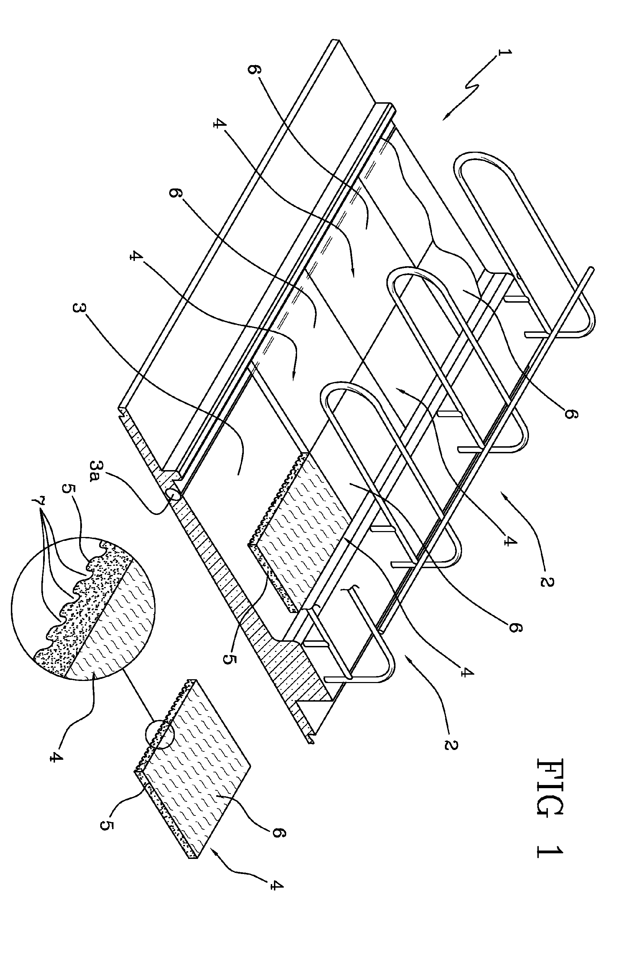

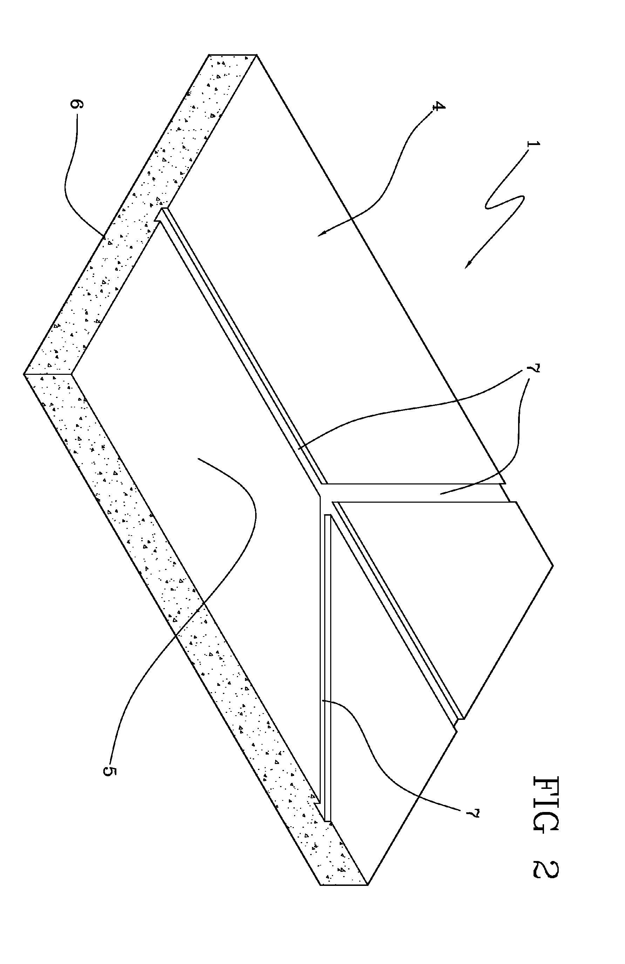

As is better shown in Figure 2, the elastically deformable element 4 has a lower surface 5 that can be laid and preferably also fastened onto the resting surface 3 of the area 2, and a flat upper surface 6 parallel to the lower one 5, which is apt to support at least one animal. It should further be noted that in the first embodiment the upper surface 6 is continuous (Figure 1) so as to be comfortable for animals walking and resting.

The mattress 1 further has hooking means (not shown in detail in the accompanying figures) associated to the lower surface 5 of the element 4 and to the resting surface 3 of the area 2, so as to connect said element 4 to said area.

Advantageously, the hooking means can be made up of a glue distributed at least on part of the lower surface 5 of the elastically deformable element 4. Alternatively, such hooking means can be made up of a mechanical connection means of known type, which is apt to keep the element 4 strongly fastened to the resting surface 3 so as to prevent the shift thereof as a result of animals' transit.

With particular reference to Figure 2, it should be noted that the lower surface 5 can advantageously have at least one groove 7 defining together with the resting surface 3 of the area 2 to be covered a channel for draining liquids such as water or animals' liquid excrements.

Preferably, the lower surface 5 has a series of grooves 8, which can have any shape and arrangement, so as to favor the discharge of such liquids as a result of the drainage thereof through the element 4.

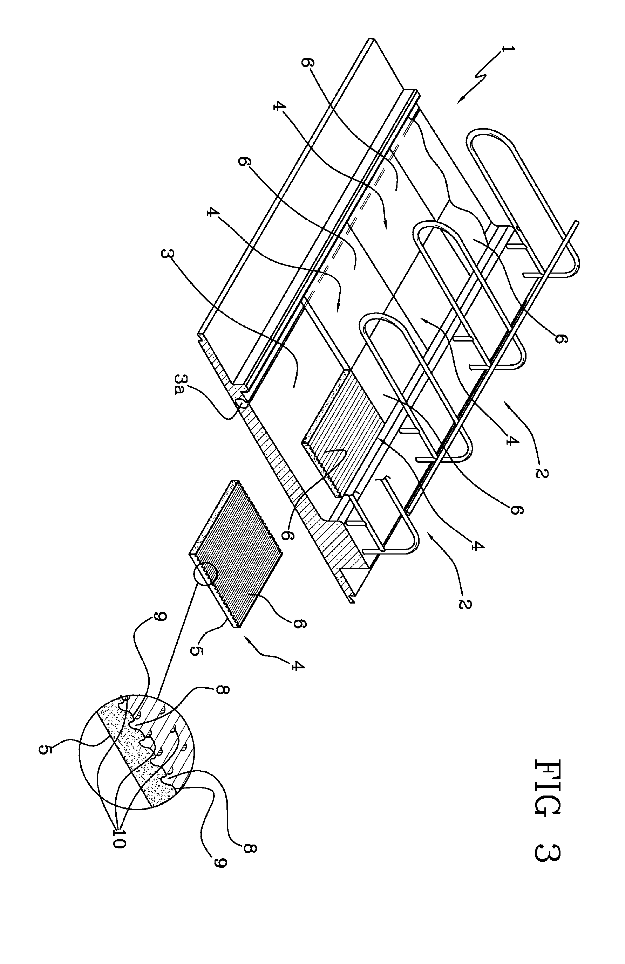

According to a second embodiment shown in Figure 3, the upper surface 6 has at least one groove 8 defining a channel for draining liquids or containing a filling material in the area in contact with the animal.

In the present description the term "groove" defines a suitable recess on the surface of the element 4. In further detail, the upper surface 6 has a plurality of grooves 8, each of them being defined between two corresponding transversal elevations 9 parallel to one another and extending on the whole development of said upper surface 6. It should be noted that the elevations 9 develop along a transversal direction with respect to the longitudinal development of the rest area 2. Thus, also the grooves 8 develop along the transversal direction so as to convey liquids (urine, water, etc.) outside the bed.

It should further be noted that in the second embodiments the elevations 9 lie one close to the other and have a small size, so as to define a basically continuous upper surface 6, which is comfortable for animals resting. Moreover, each groove 8 can be filled with a soft material such as straw, sand or sawdust (not shown in the accompanying figures) so as to make the animal's bedding more comfortable and non-abrasive for its limbs and skin.

Advantageously, each groove 8 of the upper surface 6 can be provided with a through hole 10 for establishing a fluid communication between the upper surface 6 and the lower surface 5.

Preferably, the grooves 8 have a series of holes 10 spaced away from each other for enabling excrement outflow from the upper surface 6.

Moreover, a basically central area of the mattress 1 can be provided with a hollow (not shown in the accompanying figures) matching the animal's stomach. Such hollow defines a particularly comfortable bedding for the animal and enables at the same time to convey liquids to the middle of the mattress discharging them through said holes 10.

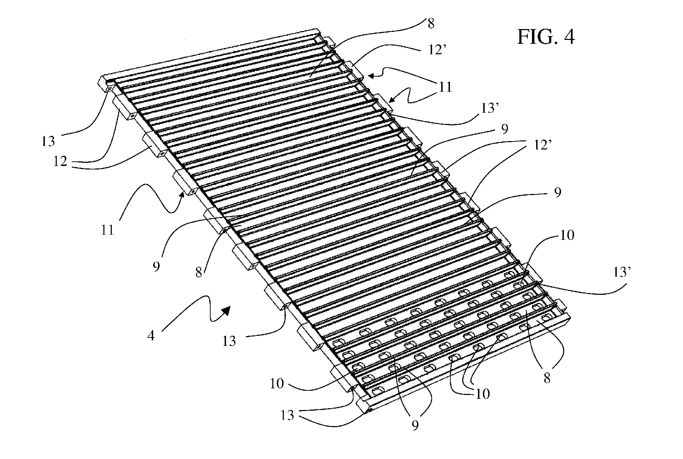

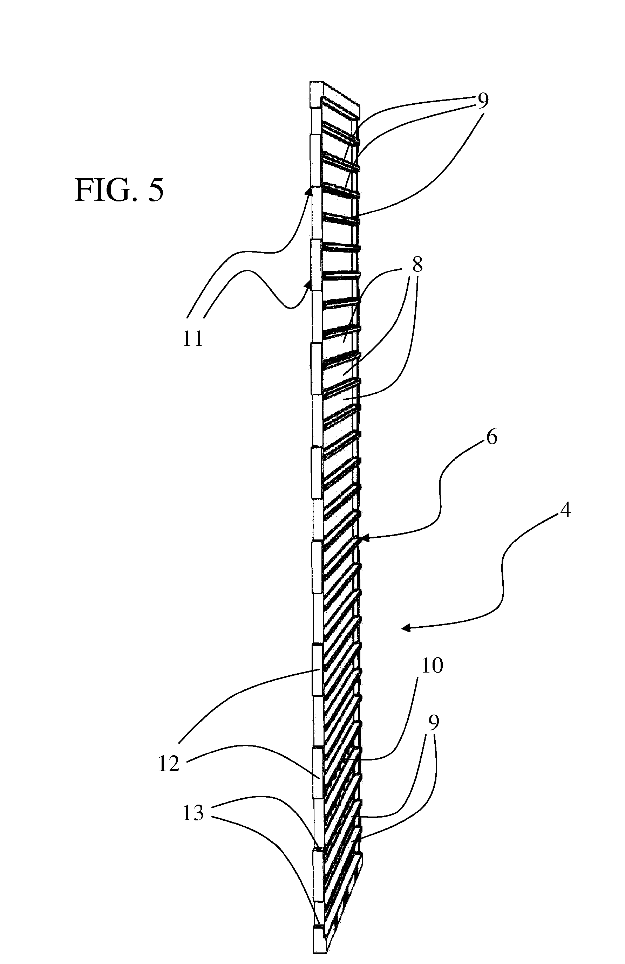

In the third embodiment shown in Figures 4 and 5, in the element 4 the elevations 9 are thinner so as to be more elastic, and the grooves 8 have a larger transversal size, so as to be able to house a larger amount of filling material in the grooves.

Preferably, the holes 10 can be provided only in a pre-established area of the mattress, as can be seen in Figure 4.

As is shown in Figure 1 by way of example, the mattress 1 can be made up of a series of elastically deformable elements 4, placed one beside the other. Thus, very broad areas 2 can be covered, defining a whole elastically deformable surface, which therefore yields under the animal's weight.

Advantageously, as shown in Figures 4 and 5, the mattress can be equipped with coupling means 11 arranged on at least two opposed lateral surfaces of the elastically deformable element 4, so as to be able to connect two elastically deformable elements 4 placed one beside the other. Such coupling means 11 are provided on two opposed lateral surfaces of the elastically deformable element and preferably comprise a plurality of coupling elements 12, each of them being equipped with a through hole and being operatively associable to corresponding matching coupling elements 12' provided with through holes 13' of another elastically deformable element 4.

The coupling means 11 further comprise at least one connection element (not shown in the figures, e.g. made up of an oblong element such as a metal bar or other), which can be inserted into the holes 13, 13' so as to couple together the two elastically deformable elements 4 placed one beside the other.

Advantageously, the mattress can comprise a plurality of overlapping layers with different properties of elastic deformability.

Preferably, the mattress can include a first upper layer having a high resistance to abrasion and a second lower layer coupled with the first one and having high values of elasticity and softness (for instance made of expanded foam).

Advantageously, at least the first layer (preferably also the second layer) is made of a porous material so as to avoid the stagnation of fluids in contact with the animal.

As a result, the mattress 1 is comfortable for animals lying down, non-abrasive for their limbs and bodies. Moreover, the soft structure of the mattress cushions the animal's hooves and contributes to the reduction of diseases related to the presence of stones on floors and to concrete hardness.

It should also be pointed that the mattress is maintenance free since no cleaning or replacement of the draining bottom is required.

Another advantage deriving from the structure of the element 4 consists in that the latter is washable, insulates from cold, heat and moisture and is nonslip precisely thanks to the deformation thereof under the animal's weight.

Moreover, the mattress 1 improves the animal's hygienic conditions. As a matter of fact, the synthetic rubber material of the element 4 ensures a draining bottom for the mattress, keeping the upper surface 6 constantly intact and dry.

Another advantage of a mattress according to the present invention consists in that it can be installed directly on any type of existing beds, even those already containing sand or other compacted filling material, without the need for specific brickwork for the installation, thus reducing both installation costs and time as well as inconveniences, if any, for the animals.

More to the point, the grooves 7, 8 simplify liquid draining, helping to keep a dry and clean area both on the upper 6 and on the lower surface 5.

## Claims

1. A mattress for farm animals, particularly ruminants, **characterized in that** it comprises at least one elastically deformable element (4) having a lower surface (5) that can be laid onto an area (2) to be covered, and an upper surface (6) for supporting at least one animal.

2. The mattress according to the preceding claim, **characterized in that** said elastically deformable element (4) is made of synthetic rubber.

3. The mattress according to the preceding claim, **characterized in that** said synthetic rubber is a recycled rubber.

4. The mattress according to any one of the preceding claims, **characterized in that** said elastically deformable element (4) is obtained by molding.

5. The mattress according to any one of the preceding claims, **characterized in that** said elastically deformable element (4) has a thickness in cross section of 5 to 300 mm.

6. The mattress according to any one of the preceding claims, **characterized in that** it further comprises hooking means associated to the lower surface (5) of the element (4) and to a resting surface (3) of the area (2) to be covered, so as to connect the element (4) to said area (2).

7. The mattress according to the preceding claim, **characterized in that** said hooking means comprise a glue distributed on the lower surface (5) of the elastically deformable element (4).

8. The mattress according to any one of the preceding claims, **characterized in that** said lower surface (5) has at least one groove (7) defining together with the resting surface (3) of the area (2) to be covered a channel for draining liquids.

9. The mattress according to any one of the preceding claims, **characterized in that** said upper surface (5) has at least one groove (8) defining a channel for draining liquids.

10. The mattress according to the preceding claim, **characterized in that** said upper surface (6) has a plurality of transversal elevations (9) alternating with corresponding grooves (8).

11. The mattress according to the preceding claim, **characterized in that** said longitudinal elevations (9) are close to one another so as to define a basically continuous upper surface (6).

12. The mattress according to any one of the claims 9 to 11, **characterized in that** said groove (8) of the upper surface (6) has at least one through hole (10) for establishing a fluid communication between the upper surface (6) and the lower surface (5).

13. The mattress according to any one of the preceding claims, **characterized in that** said upper surface (6) has a hollow (11) defined in a basically central area of the mattress.

14. The mattress according to any one of the preceding claims, **characterized in that** said elastically deformable element (4) comprises a plurality of overlapping layers; said layers having different properties of elastic deformability.

15. The mattress according to claim 14, **characterized in that** it comprises a first upper layer having a high resistance to abrasion and a second lower layer associated to the first layer and having high elasticity and softness.

16. The mattress according to claim 15, **characterized in that** at least said first layer is made of a porous material so as to avoid the stagnation of fluids in contact with the animal.

17. The mattress according to any one of the preceding claims, **characterized in that** it comprises a plurality of elastically deformable elements (4), placed one beside the other so as to cover said area (2).

18. The mattress according to any one of the preceding claims, **characterized in that** said upper (6) and lower surface (5) have a basically flat development and extend parallel to one another.

19. The mattress according to claim 17, **characterized in that** it comprises coupling means (11) placed on at least one lateral surface of said elastically deformable element (4) so as to be able to connect two elastically deformable elements (4) placed one beside the other.

20. The mattress according to claim 19, **characterized in that** said coupling means (11) are provided on two opposed lateral surfaces of said elastically deformable element (4) and comprise at least one coupling element (12) equipped with a hole (13) operatively associable to a corresponding matching coupling element (12') provided with a hole (13') of another elastically deformable element (4), and at least one connection element that can be inserted into said holes (13, 13') so as to couple together the two elastically deformable elements (4).
